# EUROPÄISCHE PATENTANMELDUNG

(11) **EP 2 233 773 A2**
(43) Veröffentlichungstag der Anmeldung: **29.09.2010**
(21) Anmeldenummer: 10151534.4
(22) Anmeldetag: 25.01.2010
(51) Int. Cl.: F16F 9/348, F16F 9/46

(54) **Federeinheit für einen Dämpfer und zugehöriger Dämpfer**

(30) Priorität: 24.03.2009 DE 102009001811
(71) Anmelder: Robert Bosch GmbH, 70442 Stuttgart (DE)
(72) Erfinder: Kratzer, Dietmar, 71732, Tamm (DE)

(57) **Zusammenfassung**

Die Erfindung betrifft eine Federeinheit (10) für einen Dämpfer mit mindestens einem Federelement (12), mit welchem zur Einstellung von Dämpferkennwerten ein Fluss eines Dämpferfluids (14) durch mindestens einen Durchflusskanal (16) regelbar ist, wobei das mindestens eine Federelement (12) zur Aufbiegung eine definierte Federcharakteristik aufweist, um das Dämpferfluid (14) in Durchflussrichtung passieren zu lassen, und einen korrespondierenden Dämpfer (26), insbesondere für ein Fahrzeug, der zur Einstellung von Dämpferkennwerten mindestens eine erfindungsgemäße Federeinheit (10) aufweist. Erfindungsgemäß weist die Federeinheit (10) eine Einstelleinrichtung (20) zur Einstellung der Federcharakteristik des mindestens einen Federelements (12) auf, das als elastische Federscheibe ausgeführt ist, welche eine im Wesentlichen senkrecht zu einer Biegelinie (24) verlaufende, eine Höhe (h) aufweisende Sicke (22) umfasst, wobei die Einstelleinrichtung (20) zur Einstellung der Federcharakteristik der Federscheibe (12) die Höhe (h) der Sicke (22) verändert.

## Beschreibung

### Stand der Technik

Die Erfindung betrifft eine Federeinheit für einen Dämpfer nach der Gattung des unabhängigen Patentanspruchs 1 und einen korrespondierenden Dämpfer, insbesondere für ein Fahrzeug, der mindestens eine solche Federeinheit umfasst.

Aus dem Stand der Technik sind passive Stoßdämpferkolben bekannt, bei denen in der Regel Federeinheiten mit als Federpakete ausgeführten Federelementen eingesetzt werden, die aus mehreren Federscheiben zur Erzeugung einer bestimmten Dämpfungskraftkennlinie bestehen. Die Federsteifigkeit des Federpakets in diesen konventionellen Stoßdämpferkolben wird einmalig während der Entwicklung abgestimmt und lässt sich danach nicht mehr verstellen. Dieses Prinzip ermöglicht einen kostengünstigen und robusten Aufbau eines Dämpferkolbens bei gleichzeitig sehr guten und in der Praxis bewährten Verläufen der Dämpferkennlinien.

In der Offenlegungsschrift DE 10 2006 037 172 A1 wird ein Dämpfer für ein Fahrzeug beschrieben. Der beschriebene Dämpfer umfasst einen Dämpferzylinder, in welchem ein Kolbenstempel über eine Kolbenstange geführt ist. Zur Einstellung von Dämpferkennwerten ist der Durchfluss eines Dämpferfluids regelbar. Zu diesem Zweck sind innerhalb des Dämpferzylinders Regelungsmittel angeordnet, welche zwei unabhängige Regelkreise für eine Zugstufenperiode und eine Druckstufenperiode aufweisen, wobei die Regelungsmittel den Durchfluss des Dämpferfluids während der Druckstufenperiode in eine erste Durchflussrichtung mit ersten Verstellmitteln und während der Zugstufenperiode in eine zweite Durchflussrichtung mit zweiten Verstellmitteln regeln. Die Verstellmittel umfassen auf Federpaketen verschiebbare Schiebeeinheiten, die durch Verschieben auf den Federpaketen die Biegebalkenlänge der Federpakete und damit die Steifigkeit der Federpakete verändern. Die Verstellgrößen für die Verstellmittel können beispielsweise durch Auswerten von Signalen von Sensoreinheiten ermittelt werden. Die Sensoreinheiten sind beispielsweise als Drucksensoren, Beschleunigungssensoren und/oder Wegesensoren ausgeführt und umfassen zur Ansteuerung und Signalauswertung zugehörige Elektronikschaltungen.

### Offenbarung der Erfindung

Die erfindungsgemäße Federeinheit für einen Dämpfer mit den Merkmalen des unabhängigen Patentanspruchs 1 hat demgegenüber den Vorteil, dass die Federeinheit eine Einstelleinrichtung zur Einstellung der Federcharakteristik des mindestens einen Federelements aufweist, das als elastische Federscheibe ausgeführt ist, welche eine im Wesentlichen senkrecht zu einer Biegelinie verlaufende, eine Höhe aufweisende Sicke umfasst, wobei die Einstelleinrichtung zur Einstellung der Federcharakteristik der Federscheibe die Höhe der Sicke verändert. Das mindestens eine Federelement weist zur Aufbiegung eine definierte Federcharakterisitk auf, um das Dämpferfluid in Durchflussrichtung passieren zu lassen. Ein wesentlicher Vorteil ergibt sich aus der Vereinfachung der Einstellung der Federcharakteristik beziehungsweise der Dämpferkennwerte, da auf aufwändige bewegliche Teile, wie beispielsweise eine konventionelle Schiebermechanik mit Drehantrieb und Drehmomentübertragung verzichtet werden kann. Dadurch, dass keine beweglichen Teile erforderlich sind, kann der Aufbau der Einstelleinrichtung beziehungsweise der Federeinheit konstruktiv einfach ausgeführt sein. Die Nachteile von beweglichen Teilen, wie beispielsweise Massenträgheit, Verschleiß, Abrieb, Verschmutzung und dadurch hervorgerufene Fehlfunktionen werden in vorteilhafter Weise vermieden. Besonders vorteilhaft ist, dass das mindestens eine Federelement als elastische Federscheibe ausgeführt ist. In vorteilhafter Weise kann die in Form und Herstellung einfache Federscheibe kostengünstig hergestellt werden.

Ein erfindungsgemäßer Dämpfer, insbesondere für ein Fahrzeug, umfasst zur Regelung einer Dämpferfluidströmung in mindestens einem Durchflusskanal mindestens eine erfindungsgemäße Federeinheit, um Dämpferkennwerte des Dämpfers einzustellen.

Durch die in den abhängigen Ansprüchen aufgeführten Maßnahmen und Weiterbildungen sind vorteilhafte Verbesserungen der im unabhängigen Patentanspruch 1 angegebenen Federeinheit für einen Dämpfer möglich.

Besonders vorteilhaft ist, dass die Einstelleinrichtung die Federsteifigkeit der mindestens einen Federscheibe einstellt. In vorteilhafter Weise kann durch die Einstellung der Federsteifigkeit der mindestens einen Federscheibe auf einfache Weise das Öffnungsverhalten der Federscheibe verändert werden, so dass ein Fluss eines Dämpferfluids durch mindestens einen Durchflusskanal gezielt geregelt werden kann.

In Ausgestaltung der erfindungsgemäßen Federeinheit ist die Einstelleinrichtung dazu vorgesehen, durch elastische Verformung der mindestens einen Federscheibe deren Federsteifigkeit zu verändern. In vorteilhafter Weise beeinflusst die Einstelleinrichtung die elastischen Eigenschaften der Federscheibe, indem die Einstelleinrichtung die wirksame Länge der Federscheibe, die so genannte Biegebalkenlänge der Federscheibe verändert.

In weiterer Ausgestaltung der erfindungsgemäßen Federeinheit ist die Einstelleinrichtung an gegenüberliegenden Seiten der Sicke an der Federscheibe angeordnet. In vorteilhafter Weise kann hierdurch die Einstelleinrichtung zur Veränderung der Federsteifigkeit der Federscheibe auf einfache Weise sowohl Druckkräfte als auch Zugkräfte auf die Federscheibe aufbringen.

Bevorzugt ist die Einstelleinrichtung als Piezoelement und/oder als Elektrohubmagnetelement und/oder als vorgespanntes Kraftspeicherelement ausgeführt. In vorteilhafter Weise ist hierdurch der Einsatz von handelsüblichen Normteilen für die Einstelleinrichtung möglich.

In einer Ausgestaltung der erfindungsgemäßen Federeinheit führen eine Vergrößerung der Höhe der Sicke zu einer Erhöhung der Federsteifigkeit der Federscheibe und eine Reduktion der Höhe der Sicke zu einer Senkung der Federsteifigkeit der Federscheibe. In vorteilhafter Weise können über kleine Veränderungen der Höhe der Sicke große Veränderungen der Federsteifigkeit der Federscheibe erzielt werden.

In einer weiteren Ausgestaltung der erfindungsgemäßen Federeinheit umfasst die Federscheibe mindestens einen ersten Abschnitt und mindestens einen gegenüber dem ersten Abschnitt verformungsweicheren zweiten Abschnitt, der im Bereich der Sicke angeordnet ist, um die Ausbildung der Sicke zu erleichtern. Durch die ausgebildete Sicke erhält die Federscheibe im zweiten Abschnitt in Aufbiegerichtung jedoch eine höhere Federsteifigkeit als im ersten Abschnitt. Die auf den ersten Abschnitt der Federscheibe einwirkenden Kräfte der Einstelleinrichtung haben keine oder eine nur sehr geringfügige Aufwölbungswirkung auf diesen Bereich der Federscheibe. Die Kräfte haben somit in vorteilhafter Weise keinen nennenswerten Einfluss auf das Biegewiderstandsmoment der Federscheibe im Bereich der wirksamen Länge der Federscheibe. Dies bedeutet, dass die auf den ersten Abschnitt der Federscheibe einwirkenden Kräfte der Einstelleinrichtung nur im Bereich der Sicke verformend wirken, nicht aber im Bereich einer Steuerkante des Durchflusskanals.

Ein Ausführungsbeispiel der Erfindung ist in den Zeichnungen dargestellt und wird in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2a zeigt eine Draufsicht auf eine erfindungsgemäße Federeinheit für einen Fahrzeugdämpfer in einer Durchflusseinrichtung eines Dämpfers mit einer Federscheibe und einer Einstelleinrichtung.
Fig. 2b zeigt eine Vorderansicht der erfindungsgemäßen Federeinheit aus Fig. 2a mit der Federscheibe und der Einstelleinrichtung.
Fig. 3a zeigt einen Ausschnitt einer Federscheibe in der Durchflusseinrichtung des Dämpfers in einer Seitenansicht.
Fig. 3b zeigt den Ausschnitt der Federscheibe aus Fig. 3a in einer Draufsicht.
Fig. 3c zeigt einen Schnitt B-B durch die Federscheibe aus Fig. 3a.
Fig. 3d zeigt eine Vorderansicht der Federscheibe aus Fig. 3a.
Fig. 4a zeigt eine Draufsicht auf die erfindungsgemäße Federscheibe bei betätigter Einstelleinrichtung, wobei die Einstelleinrichtung die Federscheibe mit Druckkräften beaufschlagt und die Betätigung der Einstelleinrichtung zu einer steifigkeitserhöhenden Wirkung bei der Federscheibe führt.
Fig. 4b zeigt einen Schnitt C-C durch die Federscheibe aus Fig. 4a.
Fig. 5a zeigt eine Draufsicht auf die erfindungsgemäße Federscheibe bei betätigter Einstelleinrichtung, wobei die Einstelleinrichtung die Federscheibe mit Zugkräften beaufschlagt und die Betätigung der Einstelleinrichtung zu einer steifigkeitssenkenden Wirkung bei der Federscheibe führt.
Fig. 5b zeigt einen Schnitt D-D durch die Federscheibe aus Fig. 5a.

### Ausführungsformen der Erfindung

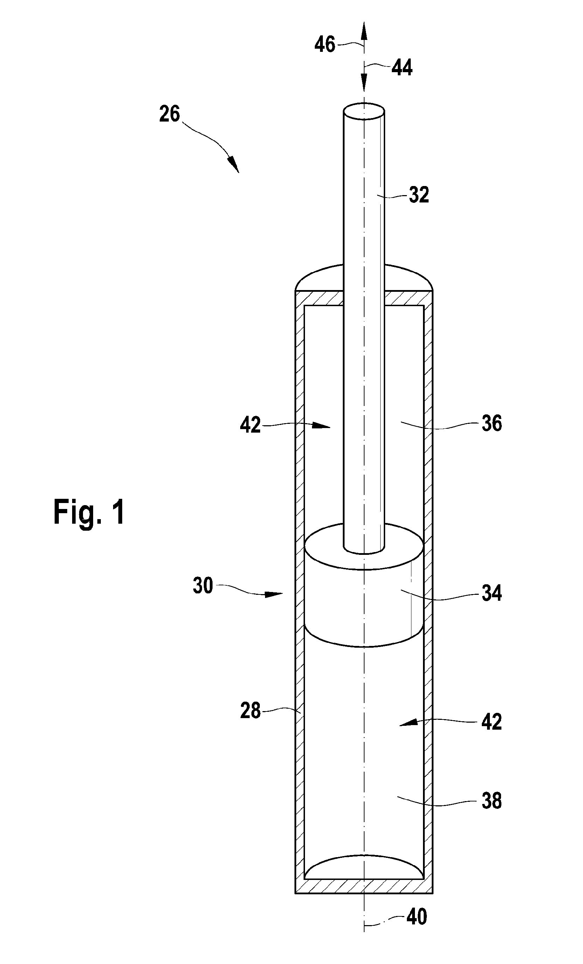

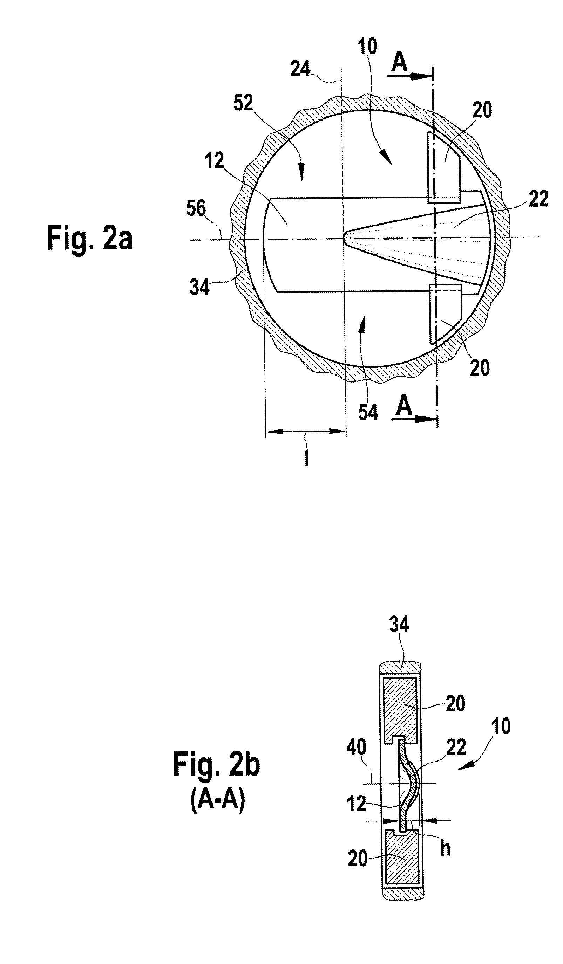

Wie aus Fig. 1 ersichtlich ist, umfasst ein erfindungsgemäßer Dämpfer 26, der vorzugsweise als Stoßdämpfer eines Fahrzeugs ausgeführt ist, einen mit einem Dämpferfluid 14 befüllten Dämpferzylinder 28, in dem eine Kolbeneinheit 30 beweglich angeordnet ist, die eine Kolbenstange 32 und einen Kolbenstempel 34 umfasst, wobei der Kolbenstempel 34 über die Kolbenstange 32 in dem Dämpferzylinder 28 geführt wird. Der Kolbenstempel 34 teilt den Dämpferzylinder 28 in eine obere Dämpferkammer 36 und in eine untere Dämpferkammer 38. Bei einer axialen, vorzugsweise in Richtung einer Hochachse 40 des Dämpfers 26 verlaufenden Bewegung der Kolbenstange 32 und damit des Kolbenstempels 34 gegenüber dem Dämpferzylinder 28 muss das Dämpferfluid 14 durch eine innerhalb des Dämpferzylinders 28 angeordnete Durchflusseinrichtung 42 fließen, die mindestens einen Durchflusskanal 16 aufweist. Die Durchflusseinrichtung 42 bildet bevorzugt einen geschlossenen Kreislauf. Im Betrieb beziehungsweise während einer Beanspruchung des Dämpfers 26 strömt durch die in Richtung der Hochachse 40 des Dämpfers 26 beziehungsweise des Dämpferzylinders 28 gerichtete Bewegung der Kolbeneinheit 30 der Dämpferfluidstrom 14 in der Durchflusseinrichtung 42. Die Durchflusseinrichtung 42 umfasst mindestens eine in eine erste Durchflussrichtung 44 wirkende Zugstufe und/oder mindestens eine in eine zweite Durchflussrichtung 46 wirkende Druckstufe. Zur Einstellung von Dämpferkennwerten ist der Fluss des Dämpferfluids 14 durch mindestens einen Durchflusskanal 16 mit Verstellmitteln 10 gemäß Fig. 2 bis 5 regelbar. Die Verstellmittel umfassen mindestens eine Federeinheit 10.

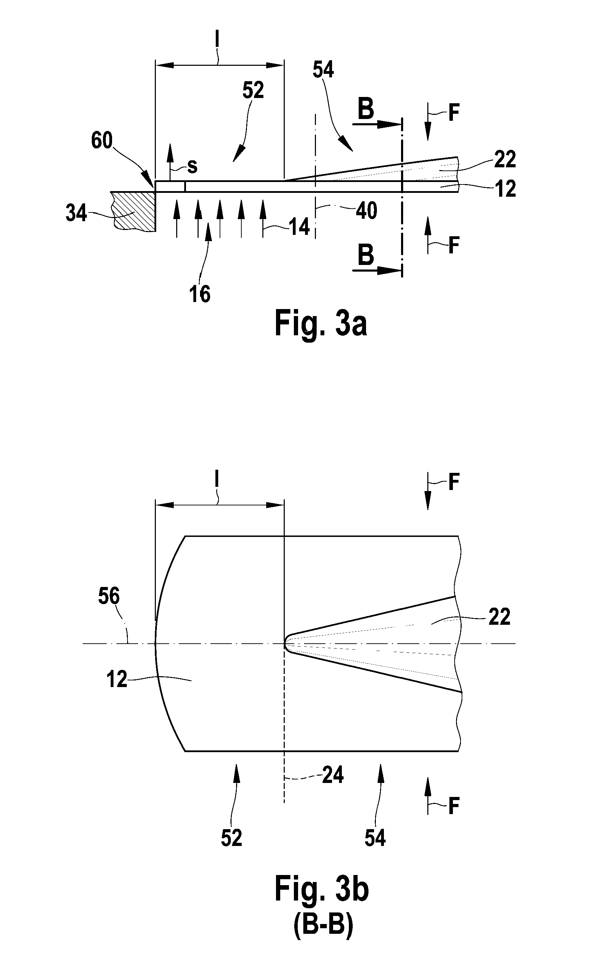

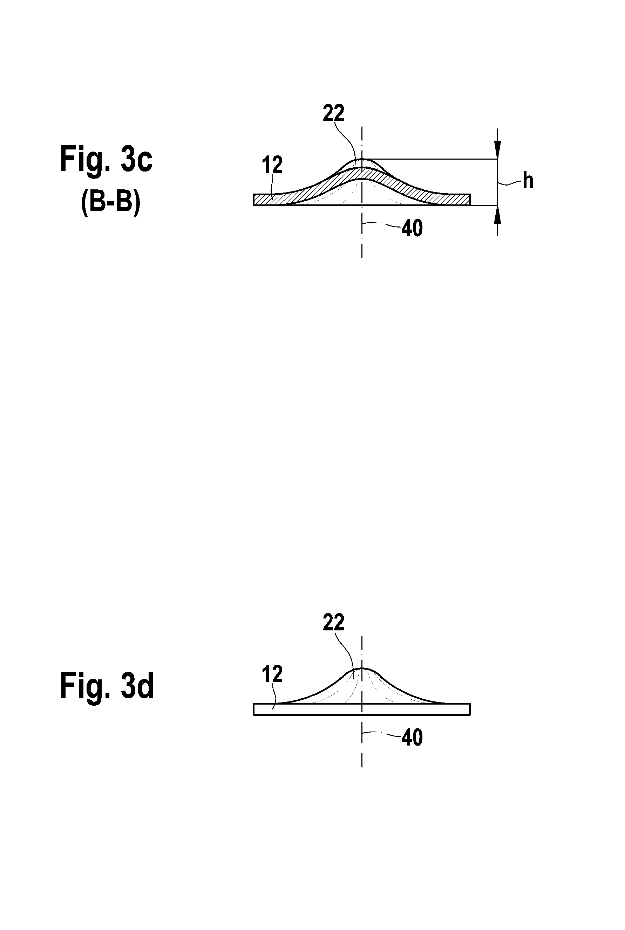

Wie aus Fig. 2a, 2b und 3a ersichtlich ist, ist eine erfindungsgemäße Federeinheit 10 in die mindestens einen Durchflusskanal 16 aufweisende Durchflusseinrichtung 42 des Fahrzeugdämpfers 26 eingebracht und wird zur Einstellung von Dämpferkennwerten verwendet. Der Durchflusskanal 16 kann beispielsweise in dem Kolbenstempel 34 angeordnet werden, welcher über die Kolbenstange 32 in dem Dämpferzylinder 28 des Fahrzeugdämpfers 26 geführt ist. Die dargestellte Federeinheit 10 weist ein Federelement 12 auf, mit welchem zur Einstellung von Dämpferkennwerten der Fluss des Dämpferfluids 14 durch den Durchflusskanal 16 regelbar ist. Der Durchflusskanal 16 ist im dargestellten Ausführungsbeispiel so in ein Bauteil eingebracht beziehungsweise wird so von mehreren Bauteilen seitlich begrenzt, dass eine axiale Auflagefläche für das Federelement 12 zur Verfügung gestellt wird. Das Federelement 12 weist zur Aufbiegung eine definierte Federcharakteristik auf, um das Dämpferfluid 14 in die durch Pfeile gemäß Fig. 3 angezeigte Durchflussrichtung passieren zu lassen.

Um den Fluss des Dämpferfluids 14 durch mindestens einen Durchflusskanal 16 zur Einstellung von Dämpferkennwerten auf einfache Weise zu ermöglichen, weist die Federeinheit 10 erfindungsgemäß eine Einstelleinrichtung 20 zur Einstellung der Federcharakteristik des Federelements 12 auf, das als elastische Federscheibe ausgeführt ist, welche eine im Wesentlichen senkrecht zu einer Biegelinie 24 der Federscheibe 12 verlaufende, eine Höhe h aufweisende Sicke 22 umfasst, wobei die Einstelleinrichtung 20 zur Einstellung der Federcharakteristik der Federscheibe 12 die Höhe h der Sicke 22 verändert. Im vorliegenden Ausführungsbeispiel stellt die Einstelleinrichtung 20 die Federsteifigkeit der mindestens einen Federscheibe 12 ein.

Die Einstelleinrichtung 20 ist dazu vorgesehen, durch elastische Verformung der Federscheibe 12 deren Federsteifigkeit zu verändern. Die Einstelleinrichtung 20 beeinflusst die elastischen Eigenschaften der Federscheibe 12, indem die Einstelleinrichtung 20 die wirksame Länge I, die so genannte Biegebalkenlänge der Federscheibe 12, beziehungsweise das Biegewiderstandsmoment W der Federscheibe 12 verändert. Vorzugsweise ist die Einstelleinrichtung 20 als Kraftelement in Form eines Piezoelementes und/oder eines Elektrohubmagnetelementes und/oder eines vorgespannten Kraftspeicherelementes ausgeführt. Im vorliegenden Ausführungsbeispiel ist die Einstelleinrichtung 20 bevorzugt als Piezoelement ausgeführt, da zur Einstellung der Federsteifigkeit der Federscheibe 12 große Kräfte bei geringen Wegen erzeugt werden müssen. Die Fig. 2a, 2b und 3a bis 3d zeigen die elastische Federscheibe 12 ohne Beaufschlagung von der Einstelleinrichtung 20, so dass die Sicke 22 ihre ursprüngliche Höhe h und die Federscheibe 12 ihre ursprüngliche wirksame Länge I aufweist. Im vorliegenden Ausführungsbeispiel handelt es sich bei der wirksamen Länge I der Federscheibe 12 um die Länge des flachen Abschnitts der Federscheibe 12.

Im vorliegenden Ausführungsbeispiel ist die Einstelleinrichtung 20 gemäß Fig. 2a und 2b an gegenüberliegenden Seiten der Sicke 22 an der Federscheibe 12 angeordnet und die Verstellkraft F der Einstelleinrichtung 20 wirkt somit in Richtung der Biegelinie 24 auf die Federscheibe 12. Alternativ hierzu kann die Einstelleinrichtung 20 gemäß Fig. 3a auch oberhalb und unterhalb der Sicke 22 der Federscheibe 12 angeordnet sein und die Verstellkraft F der Einstelleinrichtung 20 wirkt somit in Richtung einer Hochachse 40 auf die Federscheibe 12. Die Einstelleinrichtung 20 ist derart ausgeführt und/oder an der Federscheibe 12 angeordnet, dass sie sowohl Druckkräfte als auch Zugkräfte auf die Federscheibe 12 aufbringen kann.

Wie insbesondere aus den Fig. 3a bis 3d ersichtlich und bereits erwähnt ist, weist die elastische Federscheibe 12 eine im Wesentlichen senkrecht zu einer Biegelinie 24 der Federscheibe 12 in Richtung einer Längsachse 56 verlaufende, eine Höhe h aufweisende Sicke 22. Im vorliegenden Ausführungsbeispiel ist eine Sicke 22 vorgesehen, deren Höhe h und deren Breite b sich im Verlauf der Längsachse 56 verkleinern bis die Sicke 22 in eine ebene Fläche der Federscheibe 12 übergeht beziehungsweise gegen Null ausläuft. Die Sicke 22 wird bereits bei der Herstellung der Federscheibe 12 vorzugsweise durch Prägen in die Federscheibe 12 eingebracht. Die Federscheibe 12 umfasst vorzugsweise mindestens einen ersten Abschnitt 52 und mindestens einen gegenüber dem ersten Abschnitt 52 verformungsweicheren zweiten Abschnitt 54, der im Bereich der Sicke 22 angeordnet ist, um die Ausbildung der Sicke 22 zu erleichtern. Durch die ausgebildete Sicke 22 erhält die Federscheibe 12 im zweiten Abschnitt 54 in Aufbiegerichtung s jedoch eine höhere Federsteifigkeit als im ersten Abschnitt 52.

Die Fig. 3a bis 3d zeigen die Federscheibe 12 mit einer auf die Federscheibe 12 einwirkenden, hier den Wert Null aufweisenden Verstellkraft F, der wirksamen Länge beziehungsweise freien Biegelänge I der Federscheibe 12 und der Richtung einer Durchbiegung s der Federscheibe 12 an einer Steuerkante 60 des Durchflusskanals 16. Stellvertretend für ein Biegewiderstandsmoment W der Federscheibe 12 ist die Höhe der Sicke h gezeigt, welche das Biegewiderstandsmoment W maßgeblich, meist quadratisch beeinflusst. Das Biegewiderstandsmoment W beträgt beispielsweise für einfache Rechteck-Querschnitte W = b*h*h/6. Es gilt der qualitative Zusammenhang, dass F ∼ W ∼ s ∼ D beziehungsweise F ∼ 1/l ∼ s ∼ D ist, wobei mit D die Charakteristik des Dämpfers 26 bezeichnet ist, welche Werte zwischen "weich" und "steif" annehmen kann. Durch gezieltes Aufbringen einer Verstellkraft F, F₁, F₂ wird die Federscheibe 12 vorgespannt und elastisch verformt, wodurch die Ausdehnung der Sicke 22 vergrößert oder verkleinert wird. Hierdurch wird das Biegewiderstandsmoment W entsprechend vergrößert oder verkleinert beziehungsweise die freie Biegelänge I der Federscheibe 12 verkürzt oder verlängert. D.h. zur Einstellung der Federcharakteristik beziehungsweise der Federsteifigkeit der Federscheibe 12 verändert die Einstelleinrichtung 20 die Höhe h der Sicke 22, wobei eine Vergrößerung der Höhe h der Sicke 22 zu einer Erhöhung der Federsteifigkeit der Federscheibe 12 und eine Reduktion der Höhe h der Sicke 22 zu einer Senkung der Federsteifigkeit der Federscheibe 12 führt.

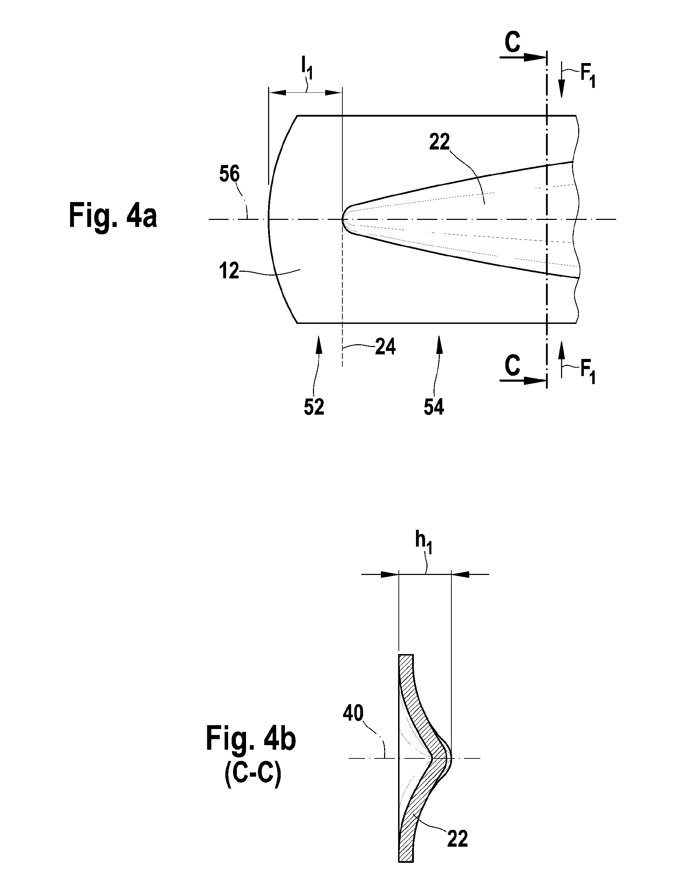

Wie aus den Fig. 4a und 4b ersichtlich, führt eine Beaufschlagung der Federscheibe 12 durch die Einstelleinrichtung 20 mit einer Druckkraft F₁ zu einem Zusammenschieben der Federscheibe 12 in Richtung der Biegelinie und somit zu einer Vergrößerung der Höhe h₁ der Sicke 22. Hierdurch verkürzt sich die wirksame Länge l₁, die so genannte Biegebalkenlänge der Federscheibe 12, wodurch die Federsteifigkeit der Federscheibe 12 erhöht wird. Bei gleicher eingeleiteter Kraft beziehungsweise Druckdifferenz zwischen Oberseite zu Unterseite des Kolbenstempels 34 wird nun ein kleinerer Öffnungshub des flachen Abschnitts der Federscheibe 12 realisiert. Hierdurch ergibt sich eine signifikant veränderte Charakteristik D des Dämpfers 26. Die Betätigung der Einstelleinrichtung 20 führt somit in diesem Fall zu einer steifigkeitserhöhenden Wirkung. Der Fluss des Dämpferfluids 14 kann somit durch eine Beeinflussung der elastischen Eigenschaften der Federscheibe 12 geregelt werden.

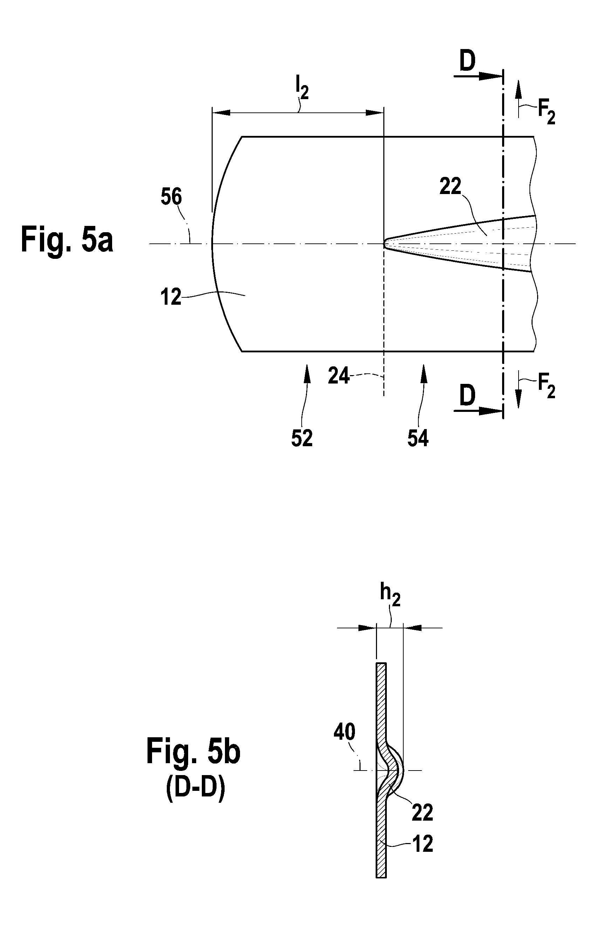

Wie aus den Fig. 5a und 5b ersichtlich, führt eine Beaufschlagung der Federscheibe 12 durch die Einstelleinrichtung 20 mit einer Zugkraft F₂ zu einem Auseinanderziehen der Federscheibe 12 in Richtung der Biegelinie und somit zu einer Verkleinerung der Höhe h₂ der Sicke 22. Hierdurch verlängert sich die wirksame Länge l₂ der Federscheibe 12, wodurch die Federsteifigkeit der Federscheibe 12 gesenkt wird. Die Federscheibe 12 weist eine geringere Federsteifigkeit auf und ist somit biegeweicher. Bei gleicher eingeleiteter Kraft beziehungsweise Druckdifferenz zwischen Oberseite zu Unterseite des Kolbenstempels 34 wird nun ein größerer Öffnungshub des flachen Abschnitts der Federscheibe 12 realisiert. Hierdurch ergibt sich eine signifikant veränderte Charakteristik D des Dämpfers 26. Die Betätigung der Einstelleinrichtung 20 führt somit in diesem Fall zu einer steifigkeitssenkenden Wirkung. Der Fluss des Dämpferfluids 14 kann somit durch eine Beeinflussung der elastischen Eigenschaften der Federscheibe 12 geregelt werden.

Alternativ bzw. ergänzend sind zur Einstellung der Dämpfercharakteristika abweichend gestaltete, Sicken aufweisende Federelemente möglich, wie beispielsweise gewellte oder mit Einschnitten versehene Federelemente.

## Patentansprüche

1. Federeinheit (10) für einen Dämpfer mit mindestens einem Federelement (12), mit welchem zur Einstellung von Dämpferkennwerten ein Fluss eines Dämpferfluids (14) durch mindestens einen Durchflusskanal (16) regelbar ist, wobei das mindestens eine Federelement (12) zur Aufbiegung eine definierte Federcharakteristik aufweist, um das Dämpferfluid (14) in Durchflussrichtung passieren zu lassen, **gekennzeichnet durch** eine Einstelleinrichtung (20) zur Einstellung der Federcharakteristik des mindestens einen Federelements (12), das als elastische Federscheibe ausgeführt ist, welche eine im Wesentlichen senkrecht zu einer Biegelinie (24) verlaufende, eine Höhe (h) aufweisende Sicke (22) umfasst, wobei die Einstelleinrichtung (20) zur Einstellung der Federcharakteristik der Federscheibe (12) die Höhe (h) der Sicke (22) verändert.

2. Federeinheit nach Anspruch 1, **dadurch gekennzeichnet, dass** die Einstelleinrichtung (20) die Federsteifigkeit der mindestens einen Federscheibe (12) einstellt.

3. Federeinheit nach Anspruch 1 oder 2, **dadurch gekennzeichnet, dass** die Einstelleinrichtung (20) dazu vorgesehen ist, durch elastische Verformung der mindestens einen Federscheibe (12) deren Federsteifigkeit zu verändern.

4. Federeinheit nach einem der Ansprüche 1 bis 3, **dadurch gekennzeichnet, dass** die Einstelleinrichtung (20) an gegenüberliegenden Seiten (48, 50) der Sicke (22) an der Federscheibe (12) angeordnet ist.

5. Federeinheit nach einem der Ansprüche 1 bis 4, **dadurch gekennzeichnet, dass** die Einstelleinrichtung (20) als Piezoelement und/oder als Elektrohubmagnetelement und/oder als vorgespanntes Kraftspeicherelement ausgeführt ist.

6. Federeinheit nach einem der Ansprüche 1 bis 5, **dadurch gekennzeichnet, dass** eine Vergrößerung der Höhe (h) der Sicke (22) zu einer Erhöhung der Federsteifigkeit der Federscheibe (12) und eine Reduktion der Höhe (h) der Sicke (22) zu einer Senkung der Federsteifigkeit der Federscheibe (12) führt.

7. Federeinheit nach einem der Ansprüche 1 bis 6, **dadurch gekennzeichnet, dass** die Federscheibe (12) mindestens einen ersten Abschnitt (52) und mindestens einen gegenüber dem ersten Abschnitt (52) verformungsweicheren, zweiten Abschnitt (54) umfasst, der im Bereich der Sicke (22) angeordnet ist.

8. Dämpfer, insbesondere für ein Fahrzeug, wobei zur Einstellung von Dämpferkennwerten der Fluss eines Dämpferfluids (14) durch mindestens einen Durchflusskanal (16) mit Verstellmitteln (10) regelbar ist, **dadurch gekennzeichnet, dass** die Verstellmittel mindestens eine Federeinheit (10) nach einem der Ansprüche 1 bis 7 umfassen.
